# EUROPÄISCHE PATENTSCHRIFT

(11) **EP 2 336 442 B1**
(45) Veröffentlichungstag und Bekanntmachung des Hinweises auf die Patenterteilung: **31.07.2013**
(21) Anmeldenummer: 10157518.1
(22) Anmeldetag: 24.03.2010
(51) Int. Cl.: E04B 1/68, E06B 1/62

(54) **Dichtband und Verfahren zur Ausrüstung eines Bauteils mit diesem Dichtband**
Seal belt and method for equipping a component with same
Bande d'étanchéité et procédé d'équipement d'un composant pourvu d'une bande d'étanchéité

(30) Priorität: 11.12.2009 EP 09178899; 11.12.2009 EP 09178897
(43) Veröffentlichungstag der Anmeldung: 22.06.2011
(73) Patentinhaber: ISO-Chemie GmbH, 73431 Aalen (DE)
(72) Erfinder:
(74) Vertreter: Wächter, Jochen

(56) Entgegenhaltungen:
- EP-A2- 1 811 111
- EP-B1- 1 131 525
- WO-A1-2005/106176
- DE-A1-102008 025 019
- US-A- 4 204 373

## Beschreibung

Die Erfindung bezieht sich auf ein Verfahren zur Ausrüstung eines Bauteils mit einem Dichtband.

Aus EP 1 131 525 B1 ist ein vorkomprimiertes Dichtband bekannt, das aus einem elastisch rückstellfähigen Schaumstoffstreifen rechteckigen Querschnitts besteht, der in komprimiertem Zustand vollständig von einer Umhüllung umschlossen ist, die von einer Kunststofffolie gebildet ist. Zur Festlegung des Schaumstoffstreifens innerhalb der Umhüllung ist er an seiner Unterseite mit der Umhüllung verklebt, und die Umhüllung ist ihrerseits an ihrer Unterseite mit gesonderten Klebemitteln, beispielsweise einem doppelseitig klebenden Band, an einem Rahmenprofil anheftbar.

Dichtbänder dieser Art werden an dem abzudichtenden Rahmenprofil angeklebt, und nach Montage des Rahmenprofils in einer Gebäudewandöffnung wird die Umhüllung aufgerissen, um es dem Schaumstoffstreifen zu ermöglichen, sich elastisch rückzustellen und damit ist das Rahmenprofil an der Gebäudewand abzudichten.

In US 4 204 373 ist ein Dichtband beschrieben, das aus einer flachen Leiste zum Ankleben an ein Rahmenprofil und einem darauf angeordneten Schaumstoffstreifen besteht. Der Schaumstoffstreifen ist von einer Folie aus Papier oder Kunststoff abgedeckt, die an der flachen Leiste angeklebt ist und den Schaumstoffstreifen im komprimierten Zustand hält. Im Randstreifen der Abdeckfolie verlaufen Aufreißfäden, mit deren Hilfe die Folie nach Installation des mit dem Dichtband versehenen Rahmenprofils im Bauwerk aufgerissen werden kann.

Bei diesen bekannten Dichtbändern ist jedoch nachteilig, dass sie nur auf ebene Rahmen aufgeklebt werden können. Oftmals ist es aber auch wünschenswert, Dichtbänder unmittelbar an Fensterrahmenprofilen anzubringen, welche nach außen vorragende längslaufende Profilleisten aufweisen.

Für einen solchen Einsatz wurde in DE 10 2008 025 019 A1 ein Dichtband offenbart, welches sich zwischen winkelförmigen Enden zweier Randprofilleisten eines Fensterrahmens fixieren lässt, indem eine biegesteife Schicht, auf der der Weichschaumstoff angeordnet ist, in den Zwischenraum zwischen den Profilleisten eingebracht wird und durch die winkelförmigen Enden gegen ein Herausrutschen gesichert wird.

Diese Ausführungsform besitzt den Nachteil, dass sie lediglich bei einem bestimmten Rahmenprofil mit genau zwei seitlichen Profilleisten angewendet werden kann, während andere Rahmenprofile mit mehreren Profilleisten nicht in Frage kommen. die Außerdem muss die biegesteife Schicht zerstört werden, um die Expansion des Weichschaumstoffs zu ermöglichten.

WO 2005/106176 A1 offenbart ein Verfahren zum Ausrüsten eines Fensters mit einer Dichtleiste, wobei die Dichtleiste seitlich an ein Rahmenprofil des Fensters angeklebt wird. Ein Leistenabschnitt der Dichtleiste kann an einer Sollknickstelle, die durch ein Filmscharnier gebildet wird, um etwa 90° derart umgebogen werden, dass er parallel zur Hauswand angeordnet ist. An dem umgebogenen Leistenabschnitt kann ein Dichtstreifen aus Weichschaumstoff angebracht sein, der den Leistenabschnitt gegen die Hauswand abdichtet. Der Weichschaumstoff kann von einer seitlichen Dichtlippe geschützt sein, die ebenfalls am umgebogenen Leistenabschnitt angebracht ist.

Der Erfindung liegt die Aufgabe zugrunde, ein einfaches und effizientes Verfahren zum Ausrüsten eines Bauteils mit einem Dichtband anzugeben.

Diese Aufgabe wird durch die Merkmale des Anspruchs 1.

Das erfindungsgemäße Verfahren zum Ausrüsten eines Bauteils mit einem Dichtband umfasst folgende Schritte: Bereitstellen eines Bauteils mit mindestens einem Profilkanal, der nach oben in eine Öffnung übergeht; Bereitstellen eines Dichtbands mit einem biegesteifen streifenförmigen Element, das mindestens eine Sollknickstelle aufweist; Umbiegen mindestens eines Schenkels des streifenförmigen Elements nach unten an der mindestens einen Sollknickstelle; und Einbringen des mindestens einen umgebogenen Schenkels in den mindestens einen Profilkanal.

Mit diesem Verfahren kann ein Bauteil mit wenigen Handgriffen und in kurzer Zeit zur Erzielung einer hervorragenden Abdichtung gegenüber dem Mauerwerk mit dem Dichtband ausgerüstet werden.

Das Dichtband umfasst einen elastisch rückstellfähigen Schaumstoffstreifen und das streifenförmiges Element, ist unterhalb des Schaumstoffstreifens angeordnet ist. Dabei weist das streifenförmige Element eine höhere Biegefestigkeit auf als der Schaumstoffstreifen.

In einer bevorzugten Ausgestaltung ist der Schaumstoffstreifen fest mit dem streifenförmigen Element verbunden. Dadurch wird eine sichere Verbindung zwischen den beiden Schichten erzeugt und ein Verrutschen der Schichten gegeneinander verhindert.

Vorteilhafterweise ist das streifenförmige Element aus biegesteifem Schaumstoff gebildet. Die dadurch erzielbaren Vorteile sind die elastische Rückstellkraft des umgebogenen Schenkels, welche für eine sichere Verklemmung des Schenkels im Profilkanal sorgt, sowie die hervorragenden Dichtwerte des biegesteifen Schaumstoffs.

Vorteilhafterweise weist das streifenförmige Element eine Biegefestigkeit von mehr als 200 kPa, bevorzugt mehr als 250 kPa, auf. In einer weiteren bevorzugten Ausgestaltung weist das streifenförmige Element eine Biegefestigkeit von mehr als 300 kPa, bevorzugt mehr als 400 kPa, auf. In einer besonders bevorzugten Ausgestaltung weist das streifenförmige Element eine Biegefestigkeit von mehr als 500 kPa, bevorzugt mehr als 1.000 kPa, und mehr bevorzugt mehr als 2.000 kPa auf.

Vorteilhafterweise ist die mindestens eine Sollknickstelle durch eine nach unten gerichtete Ausnehmung gebildet. Auf diese Weise wird das Umbiegen des Schenkels der biegesteifen Schicht nach unten erleichtert und gleichzeitig bleibt eine nach oben gerichtete Rückstellkraft im umgebogenen Schenkel vorhanden.

In einer bevorzugten Ausgestaltung ist die Ausnehmung sich nach unten verbreiternd ausgestaltet. Dadurch wird gewährleistet, dass das Umbiegen des Schenkels nach unten besonders einfach erfolgen kann und das streifenförmige Element im umgebogenen Zustand des Schenkels dennoch eine integrale, bevorzugt sogar geschlossene Einheit bildet.

Vorzugsweise weist der mindestens eine umbiegbare Schenkel in einem Endabschnitt ein Arretiermittel auf. Auf diese Weise wird die Verklemmung des umgebogenen Schenkels in einem Profilkanal des Rahmenbauteils unterstützt und ein versehentliches Herausrutschen des umgebogenen Schenkels aus dem Profilkanal noch weiter minimiert.

Ebenso ist es möglich, dass der mindestens eine umbiegbare Schenkel klebend ausgestaltet ist, was zur dauerhaften Befestigung des Schenkels am abzudichtenden Rahmenbauteil dient.

Vorzugsweise ist der Schaumstoffstreifen zumindest teilweise von einer folienhaften Umhüllung umgeben und von dieser in einem vorkomprimierten Zustand gehalten. Auf diese Weise ist es möglich, das Dichtband einfach zu lagern und zu transportieren und es erst nach dessen Befestigung am abzudichtenden Rahmenbauteil durch Öffnen der Umhüllung in seinen Funktionszustand zu bringen.

Eine besonders sichere und einfache Verbindung des Dichtbands mit dem abzudichtenden Rahmenbauteil wird erzielt, wenn das streifenförmige Element zwei Sollknickstellen derart aufweist, dass zwei Schenkel des streifenförmigen Elements an den zwei Sollknickstellen gegensinnig nach unten biegbar sind. Dadurch wird eine beidseitige sichere Klemmung des streifenförmigen Elements und damit des Dichtbands im abzudichtenden Bauteil möglich, wobei das streifenförmige Element wegen seiner in den Ursprungszustand zurückdrängenden Bestrebung eine beidseitig sichere Verklemmung in entsprechenden Profilkanälen des Rahmenbauteils sicherstellt.

In einer Ausgestaltung kann das Dichtband zu einer Rolle aufgewickelt sein, was den Transport und die Lagerung des Dichtbandes erheblich vereinfacht.

Das erfindungsgemäße Verfahren ist besonders vorteilhaft, wenn das Bauteil in einer Ausgestaltung mit zwei nach oben offenen Profilkanälen und das Dichtband in einer Ausgestaltung mit zwei gegensinnig nach unten umbiegbaren Schenkeln vorliegt, wobei die zwei Schenkel des streifenförmigen Elements im gegensinnig nach unten gebogenen Zustand in den zwei Profilkanälen eingeklemmt sind. Ein derartiges Bauteil ist auf besonders einfache Weise für eine hervorragende Abdichtung gegen das Mauerwerk ausgerüstet.

Vorzugsweise weist das Bauteil zwei Profilkanäle auf, so dass zwei Schenkel des streifenförmigen Elements nach unten umgebogen werden und in die zwei Profilkanäle eingebracht und dort verklemmt werden. Diese doppelseitige Befestigung schafft eine sichere und dauerhafte Verbindung zwischen Bauteil und Dichtband.

Die Erfindung wird nachfolgend unter Bezugnahme auf in den Zeichnungen dargestellte Ausgestaltungen für ein Dichtband, welches bei dem erfindungsgemäßen Verfahren verwendet wird, näher erläutert.
- Fig. 1: ist eine schematische Querschnittsansicht einer ersten Ausgestaltung des Dichtbands;
- Fig. 2: ist eine schematische Querschnittsansicht der ersten Ausgestaltung des Dichtbands, befestigt an einem Bauteil;
- Fig. 3: ist eine schematische Querschnittsansicht einer zweiten Ausgestaltung des vorkomprimierten Dichtbands;
- Fig. 4a und 4b: sind schematische Querschnittsansichten von zwei Varianten der zweiten Ausgestaltung des Dichtbands, befestigt an einem Bauteil;
- Fig. 5: ist eine vergrößerte schematische Querschnittsansicht eines Ausschnitts einer dritten Ausgestaltung des Dichtbands;
- Fig. 6: ist eine vergrößerte schematische Querschnittsansicht des Ausschnitts der dritten Ausgestaltung des Dichtbands, befestigt an einem Bauteil;
- Fig. 7: ist eine vergrößerte schematische Querschnittsansicht eines Ausschnitts einer vierten Ausgestaltung des Dichtbands;
- Fig. 8: ist eine vergrößerte schematische Querschnittsansicht des Ausschnitts der vierten Ausgestaltung des Dichtbands, befestigt an einem Bauteil;
- Fig. 9: ist eine vergrößerte schematische Querschnittsansicht eines Ausschnitts einer fünften Ausgestaltung des Dichtbands;
- Fig. 10: ist eine vergrößerte schematische Querschnittsansicht des Ausschnitts der fünften Ausgestaltung des Dichtbands, befestigt an einem Bauteil;
- Fig. 11: ist eine vergrößerte schematische Querschnittsansicht eines Ausschnitts einer sechsten Ausgestaltung des Dichtbands.

In den Zeichnungen sind Schaumstoffstreifen, Umhüllungen, Klebebänder, streifenförmige Elemente etc. teilweise in einem gewissen Abstand zueinander dargestellt, um die einzelnen Elemente, die das Dichtband bilden, klar voneinander abzuheben. In Wirklichkeit liegen diese Elemente jeweils eng aufeinander auf.

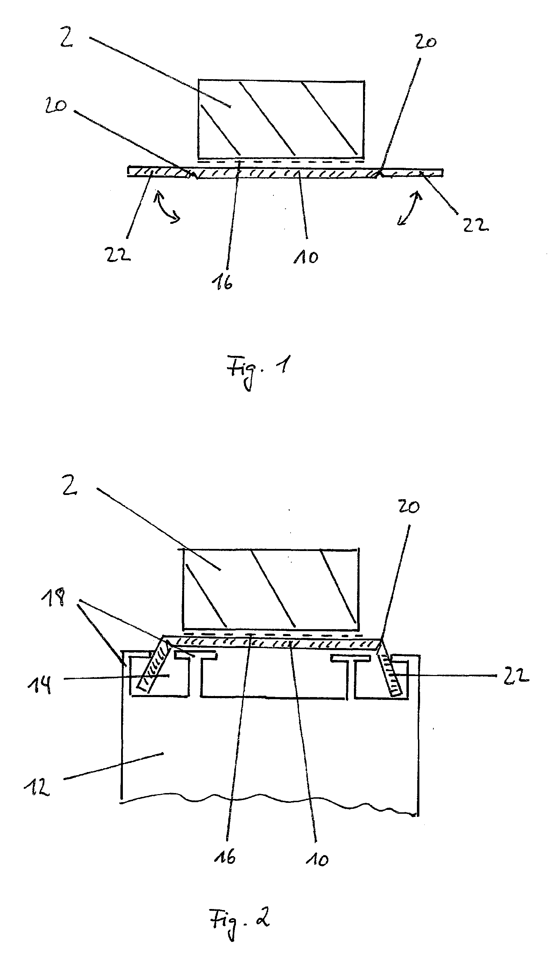

In Fig. 1 bis 4 ist ein Schaumstoffstreifen 2 dargestellt, der im dargestellten Beispiel einen rechteckigen Querschnitt hat. Der Schaumstoffstreifen 2 kann aus jedem beliebigen offenzelligen oder geschlossenzelligen Weichschaumstoff gebildet sein, z.B. aus Polyurethan oder Polyethylen, und kann für eine verzögerte Rückstellung imprägniert sein. Eine mehrlagige Anordnung mehrerer aufeinander laminierter unterschiedlicher Schaumstoffmaterialien ist ebenso denkbar wie die Anordnung einer imprägnierten Schaumstoffschicht auf oder neben einer nicht imprägnierten Schaumstoffschicht. Insbesondere in Querrichtung des Dichtbands können verschiedene Schaumstoffschichten aneinander angrenzend angeordnet sein, etwa um unterschiedliche Luftdurchlässigkeiten des Dichtbands im Innen- und Außenbereich bzw. ein Dampfdiffusionsgefälle zu gewährleisten. Es ist auch eine nicht aneinander angrenzende Anordnung von zwei oder mehr Schaumstoffstreifen 2 auf dem streifenförmigen Element 10 möglich.

Der Schaumstoffstreifen 2 erstreckt sich in seiner Längsrichtung weiter als in seiner Querrichtung und weist in den dargestellten Ausgestaltungen zwei Seitenflächen 6 und zwei Querflächen 8, 9 (Oberseite 8 und Unterseite 9) auf, welche die beiden Seitenflächen 6 verbinden.

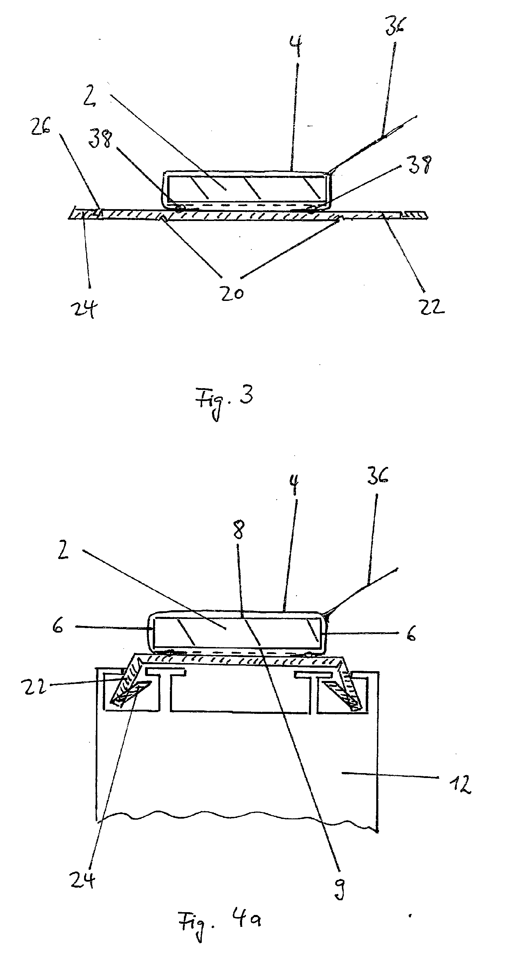

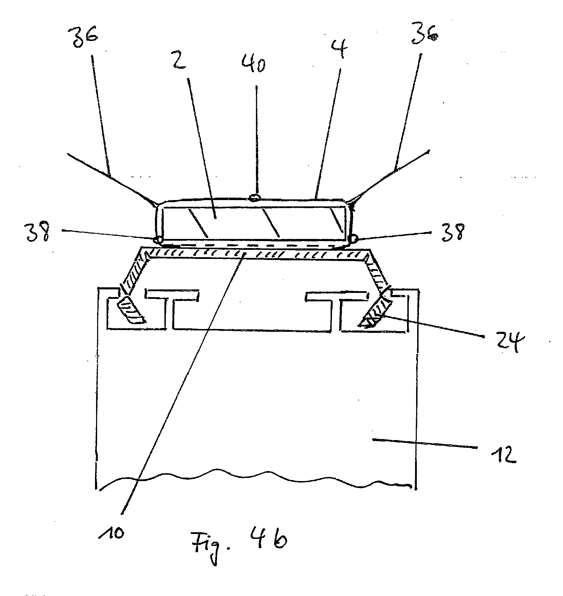

In bestimmten bevorzugten Ausgestaltungen (Fig. 3, 4a und 4b) ist der Schaumstoffstreifen 2 zumindest teilweise von einer folienhaften Umhüllung 4 umgeben und wird von dieser in einem vorkomprimierten Zustand gehalten.

Das Material der Umhüllung 4 kann ein Folienmaterial, ein Gittergewebe, Papier oder anderes Material sein, das für den genannten Einsatzzweck geeignet ist. Außerdem sind auch laminierte Folien verwendbar, die aus einer Kunststofffolie bestehen, die mit einem Trägermaterial (z.B. Vlies) laminiert ist, oder gewebeverstärkte Folien. All diese Materialien sind mit dem Ausdruck "folienhaft" umschrieben. Auch Kombinationen dieser Materialien sind möglich. Bevorzugt ist allerdings eine thermoplastische Folie oder eine Schrumpffolie, welche sich unter Wärmeeinfluss zusammenzieht.

Im Bereich der Unterseite 9 des Schaumstoffstreifens 2 ist ein streifenförmiges Element 10 angeordnet, das in Querrichtung eine gewisse Biegefestigkeit aufweist. Die Biegefestigkeit sollte so hoch sein, dass das streifenförmige Element 10 zumindest teilweise die Kraft aufnimmt, welche von der Expansionsbestrebung des Schaumstoffstreifens 2 ausgeht und üblicherweise zu einer Verformung der flexiblen Umhüllung 4 hin zu einem Schlauch mit ovalem oder sogar rundem Querschnitt führen würde, ohne dass das streifenförmige Element 10 selbst zu sehr verformt wird. Umgekehrt soll eine gewisse elastische Rückstellkraft des streifenförmigen Elements 10 nach dessen Verbiegung erhalten bleiben.

Als Material des streifenförmigen Elements 10 ist vorzugsweise ein Schaumstoff vorgesehen, der eine höhere, bevorzugt deutlich höhere Biegefestigkeit aufweist als der Schaumstoffstreifen 2. Näheres folgt hierzu weiter unten. In anderen Ausgestaltungen kommt außerdem beispielsweise Pappe in Frage, es sind aber auch alle anderen möglichen biegesteifen Materialien, z.B. harte Kunststoffe, verwendbar.

In bestimmten Ausgestaltungen sollte das streifenförmige Element 10 in Längsrichtung derart biegbar sein, dass das Dichtband noch zu einer Rolle aufgewickelt werden kann.

Ein doppelseitiges Klebeband 16 ist im dargestellten Beispielsfall zwischen der Unterseite 9 des Schaumstoffstreifens 2 und dem streifenförmigen Element 10 angeordnet und verbindet die beiden Elemente fest miteinander. Die feste Verbindung zwischen Schaumstoffstreifen 2 und streifenförmigem Element 10 kann auch über andere Mittel erfolgen, beispielsweise über thermoplastisches Laminieren. In einigen Ausgestaltungen kann die feste Verbindung zwischen Schaumstoffstreifen 2 und streifenförmigem Element 10 unter Umständen auch entfallen.

Wie aus Fig. 2, 4a, 4b, 6, 8, 10 hervorgeht, wird das Dichtband an einem Bauteil 12 befestigt, vorzugsweise einem Rahmenprofil, etwa einem Fensterrahmenprofil. Derartige Rahmenprofile bestehen z.B. aus Kunststoff oder Metall und existieren in einer Vielzahl von Formen, wobei die meisten mindestens einen, meist zwei Profilkanäle 14 aufweisen, welche durch vom Grundkörper des Bauteils abragende, meist abgewinkelte Profilleisten 18 definiert werden. Ebenso können die Profilkanäle 14 durch eine Längsrillung gebildet sein, die auch nur schwach ausgebildet sein kann. Die Profilkanäle 14 dienen an sich zum Aneinanderreihen von Rahmenprofilen, bilden aber auch gegen das Mauerwerk gerichtete Abschlüsse, die dann entsprechend abgedichtet werden müssen.

Zum Zwecke einer einfachen und dauerhaften Verbindung zwischen dem Dichtungsband und dem Bauteil 12 weist das streifenförmige Element 10 mindestens eine, vorzugsweise zwei Sollknickstellen 20 auf. Die Sollknickstellen 20 dienen dazu, ein Umbiegen eines bzw. zweier Schenkel 22 des streifenförmigen Elements 10 nach unten zu gewährleisten. Im Falle zweier Sollknickstellen 20 und zweier umzubiegender Schenkel 22 werden diese beiden Schenkel 22 gegensinnig nach unten umgebogen. In den dargestellten Ausgestaltungen befindet sich die Sollknickstelle 20 jeweils in einem Randbereich des streifenförmigen Elements 10, und der jeweilige Schenkel 22 bildet einen Endbereich des streifenförmigen Elements 10.

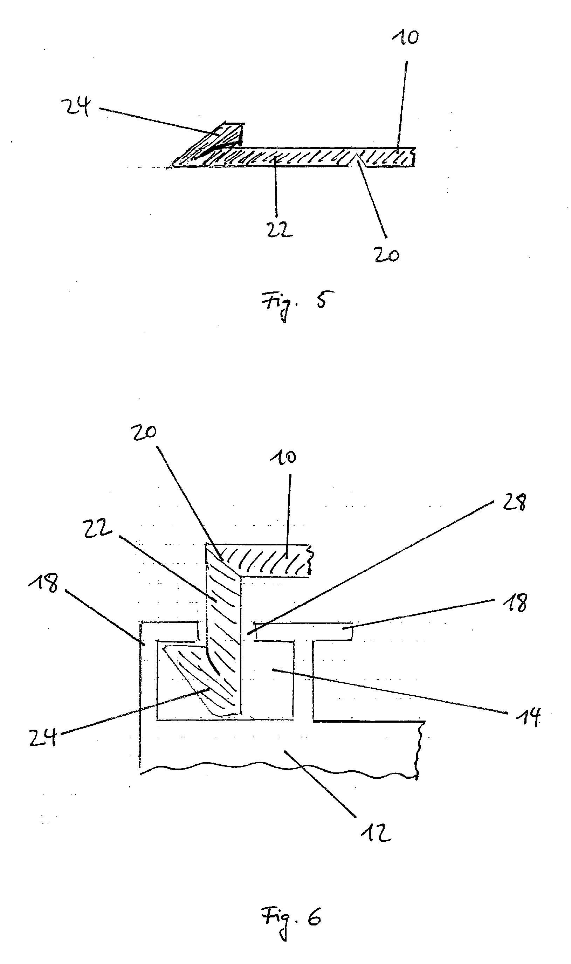

Wie insbesondere aus Fig. 5, 7 und 9 hervorgeht, ist die Sollknickstelle 20 vorzugsweise durch eine nach unten gerichtete Ausnehmung im streifenförmigen Element 10 gebildet.

Diese Ausnehmung verbreitert sich vorzugsweise nach unten hin. In der dargestellten Ausgestaltung laufen die Seitenwände, welche die Ausnehmung begrenzen, schräg auseinander und die Ausnehmung bildet somit im Querschnitt eine umgekehrte V-Form. Aufgrund des verbleibenden Materials im Steg oberhalb der Ausnehmung ist ein Bestreben zur Rückstellung des Schenkels 22 nach oben vorhanden. Es kann auch sinnvoll sein, dass der Schenkel 22 beim Umbiegen nach unten Material verdrängt, weil dies zu einer verstärkten Rückstelltendenz führt. Durch die Form und Größe der Ausnehmung kann die Bestrebung zur Rückstellung des Schenkels also materialabhängig eingestellt werden. Mit diesem einfachen Klappmechanismus kann eine Verklemmung des Schenkels 22 des streifenförmigen Elements 10 im Profilkanal 14 des Bauteils 12 stattfinden.

Neben der dargestellten Form der Ausnehmung ist als Sollknickstelle 20 ebenso ein einseitiger Schnitt, eine einseitige Fräsung, eine durch Thermoformen entstandene Dünnstelle oder eine durch eine andere Art der Materialschwächung erzielte Sollknickstelle möglich.

Wie in den Fig. 2, 4a und 4b dargestellt ist, erfolgt vorzugsweise bei allen Ausgestaltungen die Befestigung des Dichtbands am Bauteil 12 spiegelbildlich an den zwei entgegengesetzten Endbereichen des streifenförmigen Elements 10. Ebenso ist aber lediglich die Verklemmung bzw. Befestigung eines Endbereichs des streifenförmigen Elements 10 an einem Bauteil 12 denkbar, während der verbleibende Rest des streifenförmigen Elements 10 lediglich auf das Bauteil 12 geklebt oder anderweitig an ihm befestigt ist, oder im Extremfall lediglich auf ihm aufliegt.

In den in Fig. 3, 4a und 4b dargestellten Ausgestaltungen existiert zusätzlich zum zuvor erwähnten Bestreben der Schenkel 22 zur Rückstellung in die horizontale Position aufgrund der teilweise elastischen Eigenschaften des streifenförmigen Elements 10 eine weitere Kraftunterstützung, welche ebenfalls eine nach oben gerichtete Kraftkomponente auf den Schenkel 22 ausübt. Diese liegt im Expansionsbestreben des in der Umhüllung 4 aufgenommenen Schaumstoffstreifens 2 begründet. Aufgrund dessen fester Verbindung zum streifenförmigen Element 10 zieht der in der Umhüllung 4 aufgenommene Schaumstoffstreifen 2 durch die ihm innewohnende Expansionskraft die Umhüllung 4 in Richtung eines Ovals und erzeugt damit in den Bereichen des streifenförmigen Elements 10, welche knapp innerhalb der Sollknickstellen 20 liegen, eine nach oben gerichtete Kraftkomponente. Diese bewirkt in Kombination mit der teilweise elastischen Eigenschaft des an sich biegesteifen streifenförmigen Elements 10 eine Verstärkung der Klemmfunktion des Schenkels 22 in den abgewinkelten äußeren Profilleisten 18.

Es ist eine Vielzahl von Formen der Bauteile 12 sowie der zugehörigen Profilleisten 18 und damit der gebildeten Profilkanäle 14 bekannt. Um das erfindungsgemäße Dichtband möglichst flexibel bei verschiedenen Ausgestaltungen von Profilkanälen 14 anwenden zu können, ist die in Fig. 3, 4a und 4b in zwei Varianten dargestellte Ausgestaltung besonders geeignet. Hierbei ist in einem Endabschnitt des Schenkels 22 ein Arretiermittel 24 angeordnet, welches im vorliegenden Fall durch einen weiteren biegbaren Fortsatz des streifenförmigen Elements 10 gebildet ist. Dieser Fortsatz kann über eine weitere Sollknickstelle 26 mit dem Rest des Schenkels 22 verbunden sein, wird innerhalb des Profilkanals 14 entsprechend der jeweils vorliegenden Geometrie verbogen und verhakt sich dabei mit den Profilleisten 18. Zwei mögliche Arten des Verhakens sind in Fig. 4a und 4b dargestellt. Die das Arretiermittel 24 vom Rest des Schenkels 22 trennende Sollknickstelle 26 ist vorzugsweise als einfacher Schnitt von oben ausgebildet, und die äußere Kante des Arretiermittels 24 kann eine Abschrägung aufweisen.

Die in Fig. 5 und 6 dargestellte Ausgestaltung weist als Arretiermittel 24 einen Arretiersteg auf, welcher mittels Thermoformen des Materials des streifenförmigen Elements 10 oder mittels eines Extrusionsverfahrens erzeugt oder angebracht werden kann. Der Arretiersteg kann auch andere Formen aufweisen, beispielsweise kann er seitliche Vorsprünge aufweisen oder in seinem Endbereich in Tannenbaumform ausgestaltet sein.

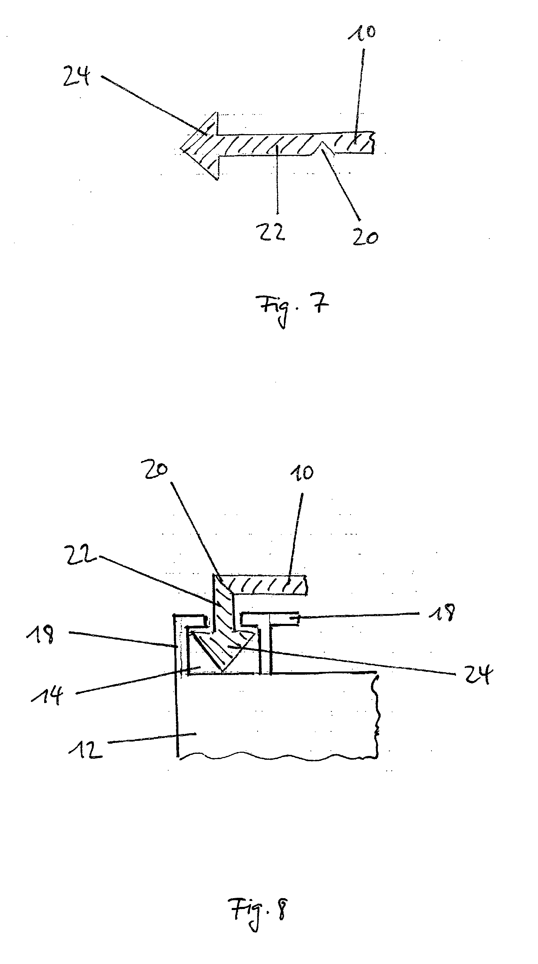

Die in Fig. 7 und 8 dargestellte Form des Arretiermittels 24 ist als Kederform ausgestaltet und dient zum seitlichen Einschieben in die Profilkanäle 14. Wenn das kederförmige Arretiermittel 24 elastisch genug ist, kann auch ein Einbringen des Arretiermittels von oben durch die Öffnung 28 des Profilkanals 14, welche in allen Ausgestaltungen der Bauteile 12 einen verringerten Querschnitt im Vergleich zum Profilkanal 14 aufweist, erfolgen.

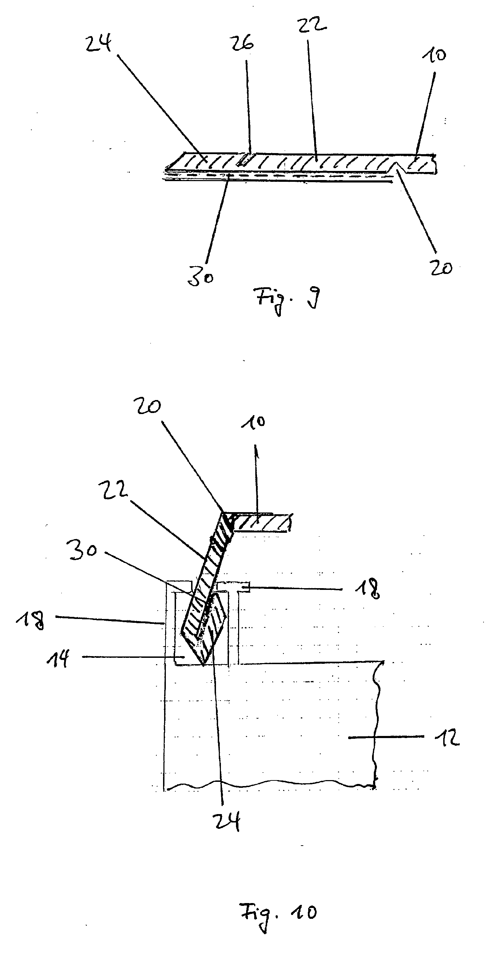

Die in Fig. 9 und 10 dargestellte Ausgestaltung entspricht der Ausgestaltung aus Fig. 3 und 4, wobei auf der Unterseite des Schenkels 22 eine Klebeschicht 30 angeordnet ist. Der als Arretiermittel 24 dienende Fortsatz kann hierbei nach innen umgebogen und gegen den Rest des Schenkels 22 verhaftet werden, wodurch sich ebenfalls eine vergrößerte Klemmwirkung innerhalb des Profilkanals 14 ergibt.

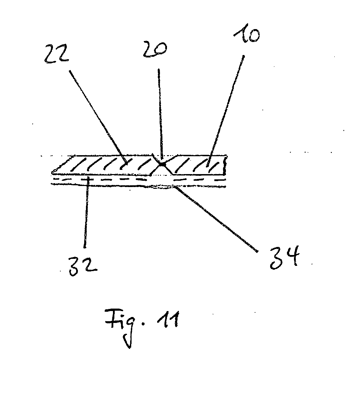

In Fig. 11 ist eine weitere Ausgestaltung des Dichtbands dargestellt. Bei dieser ist die Sollknickstelle 20 vorzugsweise als zweiseitige Ausnehmung ausgebildet, wobei darauf zu achten ist, dass der verbleibende Mittelsteg noch ausreichend dick ist, um eine feste Verbindung des Schenkels 22 mit dem Rest des streifenförmigen Elements 10 auch nach dessen Umbiegen zu gewährleisten. Vorzugsweise ist eine Selbstklebeschicht 32 an der Unterseite des Randbereichs des streifenförmigen Elements 10 einschließlich des Schenkels 22 angebracht, welche mittels einer Abdeckfolie 34 bedeckt ist.

In allen genannten Ausgestaltungen kann die Klemmbefestigung mit einer Klebebefestigung kombiniert werden, d.h. die Oberflächen der Schenkel 22 können zusätzlich klebend ausgestaltet sein und durch eine Verhaftung mit mindestens einer Flanke des Profilkanals 14 die Klemmwirkung verstärken. Ebenso ist es möglich, zunächst einen Kleber in den Profilkanal 14 einzubringen und den Schenkel 22 anschließend in den Profilkanal 14 einzuführen. Außerdem kann ein zweiter, dünnerer Schaumstoffstreifen unten am streifenförmigen Element 10 befestigt sein, um den zwischen dem streifenförmigen Element 10 und dem Bauteil 12 in deren Mittelbereich entstehenden Hohlraum zumindest teilweise zu füllen.

Das erfindungsgemäße Verfahren zum Ausrüsten eines Bauteils mit einem Dichtband ist besonders einfach. Zunächst ist das streifenförmige Element 10 einschließlich seiner Schenkel 22 horizontal ausgerichtet und damit bei ausreichender Biegbarkeit des Materials des streifenförmigen Elements 10 sogar zur Rolle aufwickelbar. Nach dem Umbiegen der Stege 22 nach unten werden diese in die Profilkanäle 14 des Bauteils 12 eingefügt und bilden dort mit den meist winkelförmigen Profilleisten 18 eine formstabile Klemmbefestigung aus. In der Regel führt die Federkraft des Stegs im Bereich der Sollknickstelle 20 zu einer Verkeilung im Profilkanal 14 und damit zur dauerhaften Befestigung.

Wie schon erwähnt, kann das Dichtband prinzipiell sowohl in Streifenform als auch als Rolle hergestellt werden. Bei besonders biegesteifen Materialien des streifenförmigen Elements 10 bleibt die Streifenform als einzige Möglichkeit.

Das Dichtband wird üblicherweise bereits vor dem Einbau oder sogar vor dem Transport des abzudichtenden Rahmenbauteils 12 an diesem befestigt. Nach dem Einbau in die entsprechende Gebäudeöffnung vor Ort muss dann unter Umständen lediglich noch die Umhüllung 4 geöffnet werden. Dabei bleibt das am Rahmenbauteil 12 befestigte streifenförmige Element 10 (welches üblicherweise nicht expansionsfähig ist) unverändert, während der Schaumstoffstreifen 2 nach oben expandiert und die Abdichtung der Fuge gewährleistet.

Insbesondere könnte auch eine Anbringung des Dichtbands an einem Fensterrahmenprofil bereits kurz nach der Fertigung desselben erfolgen, noch bevor daraus ein kompletter Fensterrahmen gefertigt wird.

Die in den Fig. 3, 4a und 4b dargestellte Umhüllung 4 kann in verschiedensten Variationen ausgebildet und an verschiedenen Stellen befestigt sein.

Bevorzugt ist eine Reißlasche 36 vorgesehen, welche durch zwei aneinandergefügte Abschnitte der Umhüllung 4 gebildet ist. Ebenso ist es möglich, lediglich eine fahnenartige Erstreckung der Umhüllung 4 vorzusehen. Durch Ziehen an der Reißlasche 36 wird die folienhafte Umhüllung 4 geöffnet und die Expansion des Schaumstoffstreifens 2 ermöglicht. Hierzu kann in der Umhüllung 4 mindestens eine Sollreißstelle 38, vorzugsweise eine Perforationslinie, vorgesehen sein. Die in Fig. 3, 4a und 4b dargestellten Positionen der Sollreißstellen 38 sind dabei bevorzugt, weil in diesem Fall nach dem Öffnen der Umhüllung 4 kein oder nur wenig Material am Schaumstoffstreifen 2 verbleibt. Jedoch ist auch eine Reihe anderer Positionen der Sollreißstellen 38 im Rahmen der Erfindung denkbar.

Ebenso ist es möglich, die Umhüllung 4 durch Zug an der Reißlasche 36 auch ohne Sollreißstelle 38 aufzureißen, wenn die Umhüllung 4 keinen großen Zugkräften widersteht, die Umhüllung 4 über einen Reißfaden aufzureißen oder die Umhüllung mit einem Messer aufzuschneiden oder mit einem anderen Hilfsmittel zu öffnen. Schließlich kann auch die gesamte Umhüllung 4 entfernt werden, wenn die Befestigung der Umhüllung am Schaumstoffstreifen 2 oder am streifenförmigen Element 10 durch Zug lösbar ist.

Die Umhüllung deckt im Beispiel der Fig. 3, 4a und 4b die beiden Seitenflächen 6 sowie die Oberseite 8 des Schaumstoffstreifens 2 ab. Im Bereich der Unterseite 9 des Schaumstoffstreifens 2 ist jeweils ein erster Abschnitt der Umhüllung 4 über einem Teilbereich der Unterseite 9 des Schaumstoffstreifens 2 angeordnet. Außerdem ist ein zweiter Abschnitt der Umhüllung 4 in einem zweiten Teilbereich der ersten Querfläche, hier Unterseite 9 des Schaumstoffstreifens 2, welche dem ersten Teilbereich gegenüberliegt, zwischen der ersten Querfläche 9 und dem streifenförmigen Element 10 angeordnet. Die beiden Abschnitte der Umhüllung 4 umfassen also die beiden unteren Kanten des Schaumstoffstreifens 2, sind nach innen umgeschlagen und dort vorzugsweise an dem streifenförmigen Element 10 befestigt, vorzugsweise verschweißt oder auflaminiert. Sie können aber auch am Schaumstoffstreifen 2 befestigt sein, etwa verklebt oder auflaminiert bzw. verschweißt. Zwischen den beiden Abschnitten der Umhüllung 4 bleibt die Unterseite 9 des Schaumstoffstreifens 2 von der Umhüllung 4 unbedeckt. Dort ist das doppelseitige Klebeband 16 befestigt. Das Klebeband 16 kann sich aber auch über die beiden Abschnitte der Umhüllung 4 erstrecken.

Auch ein durchgängiger Verlauf der Umhüllung 4 zwischen dem Schaumstoffstreifen 2 und dem streifenförmigen Element 10 ist denkbar. In diesem Fall wäre neben dem doppelseitigen Klebeband 16 noch ein weiteres doppelseitiges Klebeband notwendig, welches die Verbindung zwischen der Umhüllung 4 und dem streifenförmigen Element 10 herstellt.

Die Reißlasche 36 kann wie in Fig. 3 und 4a dargestellt auf nur einer Seite des Dichtbands ausgebildet sein. Es können aber auch zwei Reißlaschen 36 an beiden Seiten ausgebildet sein, wie in Fig. 4b dargestellt ist. In diesem vorteilhaften Fall kann eine weitere Sollreißstelle 40, vorzugsweise wieder eine Perforationslinie, im oberen Bereich der Umhüllung 4 vorhanden sein, welche bei Zug an den Reißlaschen 36 zuerst reißt und den Schaumstoffstreifen 2 expandieren lässt, bevor durch weiteren Zug an den beiden Reißlaschen 36 auch die Sollreißstellen 38 reißen und somit die Umhüllung 4 entfernt werden kann.

In der Praxis sind die Schaumstoffstreifen 2 meist so vorkomprimiert, dass sie beim Entspannen vorzugsweise bis auf etwa das Fünf- bis Zehnfache ihrer im vorkomprimierten Zustand eingenommenen Dicke expandieren können, wovon aber häufig nur etwa die Hälfte ausgenutzt wird, um eine sichere Anlage an dem Gebäudeteil zu gewährleisten, das dem abzudichtenden Profilelement gegenüberliegt.

Als Material des streifenförmigen Elements 10 ist vorzugsweise ein Schaumstoff vorgesehen, der eine höhere Biegefestigkeit aufweist als der Schaumstoffstreifen 2, üblicherweise eine deutlich höhere Biegefestigkeit. Das streifenförmige Element 10 hat generell eine Biegefestigkeit von mehr als 200 kPa, bevorzugt mehr als 250 kPa. In einer bevorzugten Ausgestaltung weist das streifenförmige Element eine Biegefestigkeit von mehr als 300 kPa, bevorzugt mehr als 400 kPa, auf. In einer besonders bevorzugten Ausgestaltung weist das streifenförmige Element eine Biegefestigkeit von mehr als 500 kPa, bevorzugt mehr als 1.000 kPa, und mehr bevorzugt mehr als 2.000 kPa auf. Gleichzeitig muss das Material des streifenförmigen Elements 10 elastisch genug sein, dass es durch die Biegung an der Sollknickstelle 20 nicht bricht und weiterhin die Tendenz aufweist, sich in seine Ausgangsform zurückzustellen. Eine Obergrenze für die Biegefestigkeit liegt daher z.B. bei 10.000 kPa.

Das Material des Schaumstoffstreifens 2 hingegen weist eine Biegefestigkeit von weniger als 150 kPa, bevorzugt weniger als 125 kPa, mehr bevorzugt weniger als 100 kPa auf, in jedem Fall aber mehr als 0 kPa.

Die Biegefestigkeit des Materials des streifenförmigen Elements 10 bzw. des Schaumstoffstreifens 2 wird dabei in Anlehnung an die Norm ISO 1209-2, dritte Ausgabe aus dem Jahr 2007, bestimmt. Diese internationale Norm wird üblicherweise zum Messen der Biegefestigkeit von Kunststoffen verwendet, eignet sich aber in etwas abgewandelter Form auch ausgezeichnet für die Messung der Biegefestigkeit von Schaumstoffen.

Hierbei wird eine gleichmäßig veränderte Kraft in der Mitte zwischen zwei Auflagen senkrecht auf eine Probe aufgebracht und diese somit durchgebogen. Aus der gemessenen Kraft-/Deformationskurve wird die Biegefestigkeit berechnet (siehe Kapitel 3 der ISO 1209-2). Die Testvorrichtung ist in Kapitel 4, Fig. 1 näher dargestellt. Ein Beispiel für das verwendete Prüfgerät ist der Typ BZ2.5/TN1S der Firma Zwick aus Ulm, Deutschland. Als Messdose wird hierbei z.B. der Typ KAP-Z für Kräfte bis 200 N eingesetzt.

Die Auflagen bestehen aus zwei parallelen zylindrischen Auflageelementen, die in derselben horizontalen Ebene angeordnet sind und von denen jedes einen Radius von (15 +/- 1) mm aufweist. Die Länge der Auflageelemente ist größer als die Breite der Proben und beträgt im vorliegenden Fall 80 mm.

Der Abstand L zwischen den Auflageelementen weicht bei der vorliegenden Messung von der ISO 1209-2 ab und ist auf (85 +/- 2) mm festgelegt. Das Kraftübertragungselement besitzt dieselbe Form wie die Auflageelemente. Auch die übrigen in Kapitel 5.1 der ISO 1209-2 angegebenen Größenangaben werden für den speziellen Einsatzzweck der Messung von Schaumstoffen geändert. Jede gemessene Schaumstoffprobe ist ein Quader mit Länge l = (150 +/- 3) mm, Breite b = (40 +/- 2) mm und Dicke d = (3,0 +/- 0,2) mm. Von den unter Kapitel 6 der ISO 1209-2 beschriebenen Testbedingungen wird die erste verwendet, also eine Messung bei (23 +/- 2) °C und (50 +/- 10) % relativer Luftfeuchtigkeit. Entgegen dem in Kapitel 7 der ISO 1209-2 angegebenen Geschwindigkeitswert der Bewegung des Kraftübertragungselements wird dieses lediglich mit (10 +/- 1) mm pro Minute nach unten bewegt. Außerdem wird die Kraft bis zu einer maximalen Durchbiegung des Schaumstoffs von 20 mm gemessen und der im Verlauf der Messung aufgetretene Maximalwert F_{R} der Kraft festgehalten.

Die Berechnung der Biegefestigkeit R (in kPa) ergibt sich gemäß Kapitel 8.1 der ISO 1209-2 somit aus der Formel R = 1,5 F_{R} * L / bd² * 10⁶, wobei F_{R} die maximale angewandte Kraft in kN ist, L der Abstand zwischen den Auflageelementen in mm, b die Breite der Probe in mm und d die Dicke der Probe in mm.

Bei den zuvor vorgegebenen Werten für L, b und d ergeben sich aus der gemessenen Kraft F_{R} für das Material des streifenförmigen Elements 10 und des Schaumstoffstreifens 2 die oben genannten Werte.

Die in den Fig. 3, 4a und 4b dargestellten Ausgestaltungen sind in einer eher idealisierten Gestalt des Querschnitts des Schaumstoffstreifens 2 dargestellt. In Wirklichkeit ist nämlich die obere Querfläche 8 des Schaumstoffstreifens 2 durch den von innen wirkenden Druck zumindest ein wenig in Richtung einer Kuppelform ausgedehnt, sodass der Querschnitt des Schaumstoffstreifens 2 im vorkomprimierten Zustand eine vom Rechteck in gewissem Umfang, wenn auch nicht zu stark abweichende Gestalt annimmt. Auch eine gewisse Querdurchbiegung (Außenwölbung) des biegesteifen Elements 10 ist in der Praxis zu beobachten, vor allem bei großen Breiten des Dichtbands.

Die Ausgestaltung wurde vorstehend am Beispiel eines Schaumstoffstreifens 1 mit rechteckigem Querschnitt beschrieben, weil dieses die Erläuterung sehr erleichtert. Mit "rechteckig" soll auch "quadratisch" umfasst sein. Der Fachmann erkennt indessen, dass sich die Ausgestaltung in entsprechender Weise auch mit Schaumstoffstreifen 2 realisieren lässt, die vom Rechteck abweichende Querschnitte haben. Die angegebene Querschnittsgestalt des Schaumstoffstreifens 2 soll daher nicht einschränkend verstanden werden.

## Patentansprüche

1. Verfahren zum Ausrüsten eines Bauteils (12) mit einem Dichtband mit folgenden Schritten:
- Bereitstellen eines Bauteils (12) mit mindestens einem Profilkanal (14), der nach oben in eine Öffnung (28) übergeht;
- Bereitstellen eines Dichtbands mit einem biegesteifen streifenförmigen Element (10), das mindestens eine Sollknickstelle (20) aufweist;
- Umbiegen mindestens eines Schenkels (22) des streifenförmigen Elements (10) nach unten an der mindestens eine Sollknickstelle (20); und
- Einbringen des mindestens einen umgebogenen Schenkels (22) in den mindestens einen Profilkanal (14).

2. Verfahren nach Anspruch 1, **dadurch gekennzeichnet, dass** das Dichtband außerdem einen elastisch rückstellfähigen Schaumstoffstreifen (2) aufweist.

3. Verfahren nach Anspruch 2, **dadurch gekennzeichnet, dass** das streifenförmige Element (10) unterhalb des Schaumstoffstreifens (2) angeordnet ist.

4. Verfahren nach Anspruch 2 oder 3, **dadurch gekennzeichnet, dass** das streifenförmige Element (10) eine höhere Biegefestigkeit als der Schaumstoffstreifen (2) aufweist.

5. Verfahren nach einem der Ansprüche 2 bis 4, **dadurch gekennzeichnet, dass** der Schaumstoffstreifen (2) fest mit dem streifenförmigen Element (10) verbunden ist.

6. Verfahren nach einem der vorangehenden Ansprüche, **dadurch gekennzeichnet, dass** das streifenförmige Element (10) aus biegesteifem Schaumstoff gebildet ist.

7. Verfahren nach einem der vorangehenden Ansprüche, **dadurch gekennzeichnet, dass** das streifenförmige Element (10) eine Biegefestigkeit von mehr als 200 kPa, bevorzugt mehr als 300 kPa, mehr bevorzugt mehr als 500 kPa, noch mehr bevorzugt mehr als 1.000 kPa aufweist, wobei die Biegefestigkeit in Anlehnung an die Norm iso 1209-2, dritte Ausgabe aus dem Jahr 2007 bestimmt wird.

8. Verfahren nach einem der vorangehenden Ansprüche, **dadurch gekennzeichnet, dass** die mindestens eine Sollknickstelle (20) durch eine nach unten gerichtete Ausnehmung gebildet ist.

9. Verfahren nach Anspruch 8, **dadurch gekennzeichnet, dass** die Ausnehmung sich nach unten verbreiternd ausgestaltet ist.

10. Verfahren nach einem der vorangehenden Ansprüche, **dadurch gekennzeichnet, dass** der mindestens eine umbiegbare Schenkel (22) in einem Endabschnitt ein Arretiermittel (24) aufweist.

11. Verfahren nach einem der vorangehenden Ansprüche, **dadurch gekennzeichnet, dass** der mindestens eine umbiegbare Schenkel (22) selbstklebend ausgestaltet ist.

12. Verfahren nach einem der Ansprüche 2 bis 5, **dadurch gekennzeichnet, dass** der Schaumstoffstreifen (2) zumindest teilweise von einer folienhaften Umhüllung (4) umgeben ist und von dieser in einem vorkomprimierten Zustand gehalten ist.

## Claims

1. Method for equipping a component (12) with a sealing tape, comprising the following steps of:
- providing a component (12) comprising at least one profiled channel (14) which transitions upwards into an opening (28);
- providing a sealing tape comprising a bend-resistant strip-shaped element (10), which comprises at least one predetermined fold point (20);
- bending at least one leg (22) of the strip-shaped element (10) downwards at the at least one predetermined fold point (20), and
- introducing the at least one bent leg (22) into the at least one profiled channel (14).

2. Method according to claim 1, **characterised in that** the sealing tape moreover comprises a resiliently restorable foam strip (2).

3. Method according to claim 2, **characterised in that** the strip-shaped element (10) is arranged underneath the foam strip (2).

4. Method according to either claim 2 or claim 3, **characterised in that** the strip-shaped element (10) has a greater flexural strength than the foam strip (2).

5. Method according to any of claims 2 to 4, **characterised in that** the foam strip (2) is rigidly connected to the strip-shaped element (10).

6. Method according to any of the preceding claims, **characterised in that** the strip-shaped element (10) is made of bend-resistant foam.

7. Method according to any of the preceding claims, **characterised in that** the strip-shaped element (10) has a flexural strength of greater than 200 kPa, preferably greater than 300 kPa, more preferably greater than 500 kPa, most preferably greater than 1,000 kPa, the flexural strength being determined according to the standard ISO 1209-2, third edition, 2007.

8. Method according to any of the preceding claims, **characterised in that** the at least one predetermined fold point (20) is formed by a recess which is directed downwards.

9. Method according to claim 8, **characterised in that** the recess is designed such that it widens downwards.

10. Method according to any of the preceding claims, **characterised in that** the at least one bendable leg (22) comprises a locking means (24) in an end portion.

11. Method according to any of the preceding claims, **characterised in that** the at least one bendable leg (22) is designed to be self-adhesive.

12. Method according to any of claims 2 to 5, **characterised in that** the foam strip (2) is enclosed at least in part by a film-like covering (4) and is held in a pre-compressed state thereby.

## Revendications

1. Procécé d'équipement d'un compostant (12) pourvu d'une bande d'étanchéité, présentant les étapes suivantes :
- mettre à disposition un composant (12) avec au moins un canal profilé (14) qui vers le haut dans une couverture (28) ;
- mettre à disposition une bande d'étanchéité avec un élément (10) en forme de bande rigide à la flexion qui présente au moins un point destiné à la flexion (20) ;
- replier au moins une branche (22) de l'élément (10) en forme de bande vers le bas sur l'au moins un point destiné à la flexion (20) ; et
- introduire l'au moins une branche repliée (22) dans l'au moins un canal profile (14).

2. Procécé selon la revendication 1, **caractérisé en ce que** la bande d'étanchéité présente en outre une bande de mousse (2) pouvant être rappelée élastiquement.

3. Procédé selon la revendication 2, **caractérisé en ce que** l'élément en forme de bande (10) est disposé sous la bande de mousse (2).

4. Procécé selon la revendication 2 ou 3, **caractérisé en ce que** l'élément en forme de bande (10) présente une résistance à la flexion supérieure à celle de la bande de mousse (2).

5. Procécé selon l'une quelconque des revendications 2 à 4, **caractérisé en ce que** la bande de mousse (2) est reliée fixement à l'élément en forme de bande (10).

6. Procédé selon l'une quelconque des revendications précédentes, **caractérisé en ce que** l'élément en forme de bande (10) est constitué de mousse résistante à la flexion.

7. Procécé selon l'une quelconque des revendications précédentes, **caractérisé en ce que** l'élément en forme de bande (10) présente une résistance à la flexion supérieure à 200 kPa, de préférence supérieure à 300 kPa, de manière davantage préférée supérieure à 500 kPa, de manière préférée entre toutes supérieure à 1 000 kPa, la résistance à la flexion étant déterminée en s'appuyant sur la norme ISO 1209-2, troisième édition de l'année 2007.

8. Procécé selon l'une quelconque des revendications précédentes, **caractérisé en ce que** l'au moins un point destiné à la flexion (20) est formé par un évidemment dirigé vers le bas.

9. Procédé selon la revendication 8, **caractérisé en ce que** l'évidement est configuré de manière à s'élargir vers le bas.

10. Procédé selon l'une quelconque des revendications précédentes, **caractérisé en ce que** l'au moins une branche repliable (22) présente un moyen d'arrêt (24) dans une section d'extrémité.

11. Procédé selon l'une quelconque des revendications précédentes, **caractérisé en ce que** l'au moins une branche repliable (22) est configurée de manière autocollante.

12. Procédé selon l'une quelconque des revendications 2 à 5, **caractérisé en ce que** la bande de mousse (2) est entourée au moins en partie d'une enveloppe (4) de type film et est maintenue par celle-ci dans un état précomprimé.
